# EUROPÄISCHE PATENTANMELDUNG

(11) **EP 2 562 512 A1**
(43) Veröffentlichungstag der Anmeldung: **27.02.2013**
(21) Anmeldenummer: 11178844.4
(22) Anmeldetag: 25.08.2011
(51) Int. Cl.: G01B 7/30, G01D 5/12, H02K 24/00

(54) **Drehgeber**

(71) Anmelder: SICK STEGMANN GmbH, 78166 Donaueschingen (DE)
(72) Erfinder: Wagner, Rolf, 78166 Donaueschingen (DE)
(74) Vertreter: Ludewigt, Christoph

(57) **Zusammenfassung**

Die Erfindung betrifft einen Drehgeber (10) mit einer drehfest an einer Eingangswelle (20) gelagerten Maßverkörperung (24), mit einer der Maßverkörperung (24) zugeordneten Abtasteinrichtung (26, 32) zur kontinuierlichen Erfassung einer Winkelstellung der Eingangswelle (20), sowie mit einer Auswertungseinheit (28), die mit der Abtasteinrichtung (26, 32) verbunden ist, um die Winkelstellung der Eingangswelle (20) kontinuierlich bestimmen zu können. Um einen verbesserten energieautarken Drehgeber bereitzustellen wird vorgeschlagen, dass im Drehgeber (10) eine Energieversorgungseinheit (34) vorgesehen ist, die aus der Drehbewegung der Eingangswelle (20) sämtliche elektrische Energie für den kontinuierlichen Betrieb des Drehgebers (10) erzeugt.

## Beschreibung

Die Erfindung betrifft einen Drehgeber nach dem Oberbegriff des Anspruchs 1.

Drehgeber dienen der Messung und Kontrolle von Drehwinkeln einer Welle. Der Drehgeber selbst ist ein passiver Sensor, der an eine Maschine, deren sich drehende Welle gemessen werden soll, angeflanscht ist. Die Maschinenwelle ist mit einer Eingangswelle des Drehgebers drehfest gekoppelt. Der Drehgeber benötigt für seine Elektronik ― wie jeder Sensor ― elektrische Energie. Die Energie wird über Kabel zugeführt, die dann auch meist Signalleitungen enthalten, auf denen die Drehwinkelsignale und auch weitere Signale, beispielsweise Konfigurationsdaten für den Drehgeber und dergleichen geführt werden.

Aus der DE 10 2009 019 719 A1 ist ein energieautarker Umdrehungszähler bekannt, der einen Wiegandsensor umfasst, mit dem einerseits die Umdrehungen erfasst und andererseits Spannungspulse zur Energieversorgung erzeugt werden. Die Spannungspulse werden jedoch nur dann erzeugt, wenn ein Magnet an dem Wiegandsensor vorbeigeführt wird. Bei einer Anordnung von mehreren Magneten auf dem Umfang kann zusätzlich zur Umdrehungszählung eine grobe Positionsbestimmung erfolgen. In einer weiteren Ausführungsform weist die Anordnung zusätzlich einen Messwertaufnehmer auf, beispielsweise einen Hallsensor, mit dem zu den Zeitpunkten, an denen Energie erzeugt wird, auch eine feinere Bestimmung der Absolutposition erfolgen kann. Das Prinzip der Energieerzeugung mit einem Wiegandsensor bedeutet aber, dass nur für den Moment des Vorbeiziehens eines Magneten am Wiegandsensor Energie vorliegt. Die Positionsbestimmung erfolgt somit nur punktweise.

Ganz ähnlich arbeitet ein aus der DE 10 2004 062 448 A1 bekannter Lenkwinkelsensor für ein Kraftfahrzeug. Dieser weist einen oder mehrere Wieganddrähte auf, um im stromlosen Zustand, also wenn die Zündung des Fahrzeugs ausgeschaltet ist, wenigstens noch punktweise eine Betätigung der Lenkung erfassen zu können und damit wenigstens noch grob die absolute Drehlage der Lenksäule zu bestimmen.

Aus der DE 103 16 251 A1 ist ein Drehgeber bekannt, der neben einer leitungsgebundene Energieversorgung zusätzlich einen aufladbaren Energiespeicher aufweist, um bei Ausfall der Spannungsversorgung auf einen Hilfsbetrieb umstellen zu können. Im Hilfsbetrieb erfolgt die Energieversorgung aus dem Energiespeicher. Der Energiespeicher ist im Normalbetrieb mittels bekannter physikalischer Wandlungsprinzipien wieder aufladbar.

Ausgehend von diesem Stand der Technik ist es Aufgabe der Erfindung, einen verbesserten energieautarken Drehgeber bereitzustellen.

Diese Aufgabe wird gelöst durch einen Drehgeber mit den Merkmalen des Anspruchs 1.

Ein erfindungsgemäßer Drehgeber weist eine drehfest an einer Eingangswelle gelagerte Maßverkörperung auf sowie eine der Maßverkörperung zugeordnete Abtasteinrichtung zur kontinuierlichen Erfassung einer Winkelstellung der Eingangswelle und eine Auswertungseinheit, die mit der Abtasteinrichtung verbunden ist, um die Winkelstellung der Eingangswelle kontinuierlich bestimmen zu können. Erfindungsgemäß ist im Drehgeber eine Energieversorgungseinheit vorgesehen, die aus der Drehbewegung der Eingangswelle sämtliche elektrische Energie für den kontinuierlichen Betrieb des Drehgebers erzeugt.

Damit ist ein Drehgeber gegeben, der vollständig energieautark kontinuierlich die Winkelstellung der Eingangswelle erfasst. Der wesentliche Gedanke steckt also in der Erkenntnis, den Zwangsantrieb der Eingangswelle des an sich passiven Drehgebers für die Energiegewinnung zu nutzen, und zwar durch die Energieversorgungseinheit, die die mechanische Drehbewegung der Eingangswelle in elektrische Energie wandelt und dadurch sämtliche elektrische Energie für den kontinuierlichen Betrieb des Drehgebers erzeugt. Dabei ist es wichtig zu betonen, dass dadurch ein kontinuierlicher Betrieb des Drehgebers möglich ist, also eine kontinuierliche Erfassung der Winkelstellung mit z. B. einer Auflösung, wie sie von leitungsgebundenen Drehgebern bekannt ist.

Zum Erfassen der Winkelstellung kann der Drehgeber in bekannter Weise so aufgebaut sein, dass er die Winkelstellung elektrooptisch erfasst. Dann ist die Maßverkörperung beispielsweise als Codescheibe ausgebildet. Es sind aber auch andere Prinzipien denkbar, z. B. kann die Erfassung auch magnetisch erfolgen, so dass dann die Maßverkörperung als eine magnetische Anordnung ausgebildet ist, beispielsweise von einen oder mehreren Permanentmagneten.

Da es sehr effektive Dynamos gibt, ist es vorteilhaft, wenn die Energieversorgungseinheit einen an die Eingangswelle gekoppelten Generator aufweist. Es wäre auch denkbar, den oder die oben beschriebenen Permanentmagnete nicht nur als Maßverkörperung für die Winkelbestimmung, sondern gleichzeitig auch für die Energieversorgungseinheit zur Energiegewinnung zu nutzen.

Häufig kommt es in der Anwendung vor, dass ein Drehgeber auch bei Stillstand der Wellen Daten ausgeben oder Daten empfangen soll. Deshalb ist in Weiterbildung der Erfindung ein Energiespeicher in der Energieversorgungseinheit vorgesehen, um temporär Energie speichern und die Stillstandszeiten überbrücken zu können. Der Energiespeicher kann vorteilhafterweise als Pufferkondensator oder als Akkumulator ausgebildet sein.

In Weiterbildung der Erfindung weist die Energieversorgungseinheit eine Überlastschaltung zur Verhinderung einer Überlastung der elektrischen Schaltung auf. Ebenso kann in der Energieversorgungseinheit ein Spannungswandler zur Spannungsanpassung und/oder ein Spannungsbegrenzer zur Spannungsbegrenzung zum Schutz der zu versorgenden Elektronik vorgesehen sein.

Um den Drehgeber völlig kabellos betreiben zu können, umfasst in Weiterbildung der Erfindung die Auswertungseinheit eine Sendestufe, um das Winkelsignal drahtungebunden senden zu können und gegebenenfalls auch eine Empfangsstufe, um Steuer oder Parametriersignale drahtungebunden empfangen zu können.

Vorteilhafterweise ist der Drehgeber als inkrementaler oder Absolutdrehgeber ausgebildet.

Die Erfindung wird nachstehend auch hinsichtlich weiterer Merkmale und Vorteile beispielhaft anhand von Ausführungsformen und unter Bezug auf die beigefügte Zeichnung näher erläutert. In der Zeichnung zeigen:

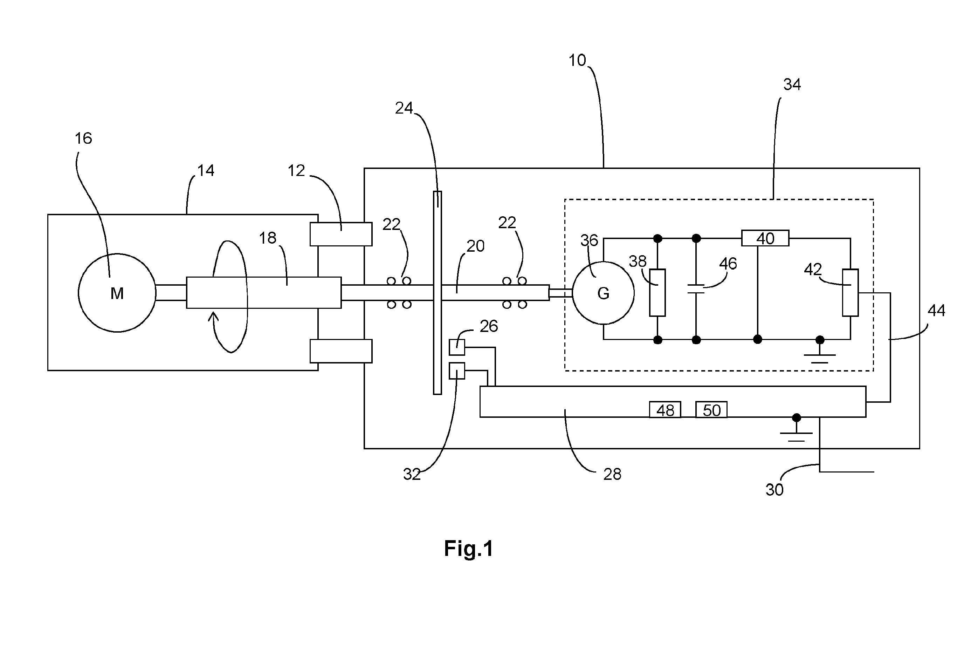

- Fig. 1: eine schematische Darstellung einer Ausführungsform eines erfindungsgemäßen Drehgebers an einer Maschine

Ein in Fig. 1 dargestellter erfindungsgemäßer Drehgeber 10 ist mit seinem Gehäuse über eine Drehmomentstütze 12 an einer Maschine 12 festgelegt. Die Maschine 14 umfasst einen Motor 16, der eine Antriebswelle 18 treibt. Der Drehgeber 10 ist an der Maschine 12 befestigt, um die Drehung bzw. die Winkelstellung der Antriebswelle 18 zu messen. Der Drehgeber 10 kann als inkrementaler Drehgeber oder als Absolutdrehgeber ausgebildet sein.

Zur Messung der Winkelstellung ist die Antriebswelle 18 drehfest mit einer Eingangswelle 20 verbunden. Die Eingangswelle 20 ist über Drehlager 22 drehbar in dem Drehgeber 10 gelagert. Eine Maßverkörperung 24 ist drehfest mit der Eingangswelle 20 verbunden. Die Maßverkörperung 24 dieses Ausführungsbeispiels soll eine optische Codescheibe sein. Andere Maßverkörperungen sind denkbar, wenn der Drehgeber nach anderen physikalischen Messprinzipien arbeitet. Zum Beispiel könnte der Drehgeber magnetisch arbeiten, so dass die Maßverkörperung beispielsweise als Permanentmagnet ausgebildet ist und die Winkelstellung des Permanentmagneten über einen oder mehrere Hallsensoren erfasst würde.

Der Maßverkörperung 24 ist eine erste Abtasteinrichtung 26 zugeordnet, die beispielsweise einen Lichtsender und einen Lichtempfänger umfasst, wobei das Licht durch die Codescheibe 24 moduliert wird und diese Modulation durch den Lichtempfänger kontinuierlich erfasst wird. Derartige optische Prinzipien sind bekannt und dienen zur kontinuierlichen Erfassung der Winkelstellung der Eingangswelle 20. Dazu ist die Abtasteinrichtung 26 mit einer Auswertungseinheit 28 verbunden, um die Signale der Abtasteinrichtung, hier des Lichtempfängers, auszuwerten und in eine Winkelstellung der Eingangswelle 20 und damit der Antriebswelle 18 umzuwandeln. Die Winkelsignale können an einem Ausgang 30 ausgegeben werden. Auf diese Weise lässt sich die Winkelstellung kontinuierlich bestimmen.

Es kann eine weitere Abtasteinrichtung 32 vorgesehen sein, mit der beispielsweise eine Mehrfachumdrehung der Maßverkörperung erfasst werden kann, um z. B. den Drehgeber als sogenannten Multiturn einsetzen zu können, der den Winkel absolut über mehrere Umdrehungen bestimmen kann.

Erfindungsgemäß ist im Drehgeber 10 zusätzlich eine Energieversorgungseinheit 34 vorgesehen, die aus der Drehbewegung der Eingangswelle 20 sämtliche elektrische Energie für den kontinuierlichen Betrieb des Drehgebers 10 erzeugt. Die Energieversorgungseinheit 34 weist einen Generator 36 auf, der drehfest an die Eingangswelle 20 gekoppelt ist. Der Generator 36 könnte so aufgebaut sein, dass ein sich mit der Eingangswelle 20 drehender Dauermagnet durch die Drehbewegung ein rotierendes Magnetfeld erzeugt, welches in einer Leiterwicklung eines Stators des Generators 36 eine elektrische Spannung induziert. Derartige Generatoren sind selbstverständlich bekannt und laufen sehr effizient.

Da die erzeugte Spannung von der Drehgeschwindigkeit und deren Änderungen abhängt und die von der Energieversorgungseinheit 34 zu versorgende Elektronik, wie die Auswerteeinheit 28 und Abtasteinrichtungen 26, 32, womöglich derartige Spannungsschwankungen nicht vertragen, weist die Energieversorgungseinheit 34 mehrere elektronische Komponenten zum Schutz der zu versorgenden Elektronik auf. Diese Komponenten umfassen eine Überlastschaltung 38 zur Verhinderung einer Überlastung, einen Spannungswandler 40 zur Spannungsanpassung und einen Spannungsbegrenzer 42 zur Spannungsbegrenzung.

Über eine Verbindung 44 erfolgt die Energieversorgung der zu versorgenden Elektronik.

Um auch bei Stillstand der Wellen Daten des Drehgebers ausgeben oder Steuerdaten für den Drehgeber empfangen zu können, ist ein Energiespeicher 46 in der Energieversorgungseinheit 34 vorgesehen. Dieser ist in diesem Ausführungsbeispiel als Pufferkondensator ausgebildet und kann temporär Energie speichern, die in Stillstandszeiten an die zu versorgende Elektronik abgegeben wird. Der Energiespeicher 46 könnte auch als Akkumulator ausgebildet sein.

Um den Drehgeber 10 völlig kabellos betreiben zu können, kann die Auswertungseinheit 28 eine Sendestufe 48 umfassen, so dass die erfassten Winkelsignale drahtungebunden, beispielsweise über Funk, vom Drehgeber 10 gesendet werden können. Weiter kann die Auswertungseinheit eine Empfangsstufe 50 umfassen, um Steuer- oder Parametriersignale für den Drehgeber 10 drahtungebunden empfangen zu können.

## Patentansprüche

1. Drehgeber (10) mit einer drehfest an einer Eingangswelle (20) gelagerten Maßverkörperung (24), mit einer der Maßverkörperung (24) zugeordneten Abtasteinrichtung (26, 32) zur kontinuierlichen Erfassung einer Winkelstellung der Eingangswelle (20), sowie mit einer Auswertungseinheit (28), die mit der Abtasteinrichtung (26, 32) verbunden ist, um die Winkelstellung der Eingangswelle (20) kontinuierlich bestimmen zu können, **dadurch gekennzeichnet, dass** im Drehgeber (10) eine Energieversorgungseinheit (34) vorgesehen ist, die aus der Drehbewegung der Eingangswelle (20) sämtliche elektrische Energie für den kontinuierlichen Betrieb des Drehgebers (10) erzeugt.

2. Drehgeber nach Anspruch 1, **dadurch gekennzeichnet, dass** die Energieversorgungseinheit (34) einen an die Eingangswelle (20) gekoppelten Generator (36) aufweist.

3. Drehgeber nach einem der vorhergehenden Ansprüche, **dadurch gekennzeichnet, dass** die Energieversorgungseinheit (34) einen Energiespeicher (46), insbesondere Pufferkondensator oder Akkumulator, zur temporären Energiespeicherung aufweist.

4. Drehgeber nach einem der vorhergehenden Ansprüche, **dadurch gekennzeichnet, dass** die Energieversorgungseinheit (34) eine Überlastschaltung (38) und/oder einen Spannungswandler (40) und/oder einen Spannungsbegrenzer (42) aufweist.

5. Drehgeber nach einem der vorhergehenden Ansprüche, **dadurch gekennzeichnet, dass** die Auswertungseinheit (28) eine Sendestufe (48) umfasst, um das Winkelsignal drahtungebunden senden zu können.

6. Drehgeber nach einem der vorhergehenden Ansprüche, **dadurch gekennzeichnet, dass** die Auswertungseinheit (28) eine Empfangsstufe (50) umfasst, um Steuersignale drahtungebunden empfangen zu können.

7. Drehgeber nach einem der vorhergehenden Ansprüche, **dadurch gekennzeichnet, dass** der Drehgeber (10) als inkrementaler oder Absolutdrehgeber ausgebildet ist.
